# EUROPEAN PATENT APPLICATION

(11) **EP 4 545 299 A1**
(43) Date of publication of application: **30.04.2025**
(21) Application number: 23826713.2
(22) Date of filing: 10.02.2023
(51) Int. Cl.: B33Y 30/00, B33Y 50/02, B29C 64/218, B29C 64/241, B29C 64/393, B22F 12/63

(54) **THREE-DIMENSIONAL SHAPING APPARATUS**

(30) Priority: 21.06.2022 JP 2022099752
(71) Applicant: Roland DG Corporation, Hamamatsu-shi, Shizuoka 431-2103 (JP)
(72) Inventor: IWASE Fumiyoshi, Hamamatsu-shi, Shizuoka 431-2103 (JP)
(74) Representative: Grünecker Patent- und Rechtsanwälte PartG mbB
(86) International application number: PCT/JP2023/004542
(87) International publication number: WO 2023/248523

(57) **Abstract**

A three-dimensional shaping apparatus **10** includes a rotatable stacking roller **31,** a drive device **33** that rotates the stacking roller **31,** a detection device **34** that detects a rotational position of the stacking roller **31,** and a moving device **20** that moves the stacking roller **31** at least from above a supply table **42** to above a shaping tank **50.** The three-dimensional shaping apparatus **10** is configured to control the drive device **33** based on the rotational position of the stacking roller **31** detected by the detection device **34** so that the position of the stacking roller **31** in the moving direction **X** and the rotational position of the stacking roller **31** correspond to each other while moving over the shaping tank **50.**

## Description

### TECHNICAL FIELD

The present invention relates to a three-dimensional shaping apparatus.

### BACKGROUND ART

Apparatuses have been known in the art that produce a three-dimensional shaped object by discharging a curing liquid onto a powder material to form a thin cured layer having a desired cross-sectional shape, and stacking such cured layers. For example, PTL 1 discloses a three-dimensional shaping apparatus including a shaping tank in which a three-dimensional shaped object is shaped, a supply tank that holds powder to be supplied to the shaping tank, a flattening roller that transfers the powder from the supply tank to the shaping tank to form a powder layer, and a liquid discharge head that discharges a curing liquid for curing powder onto the powder layer on the shaping tank.

### CITATION LIST

### PATENT LITERATURE

PTL 1: JP 2017-164989 A

### SUMMARY OF INVENTION

### TECHNICAL PROBLEM

The stacking roller for flattening the powder material on the shaping tank while rotating is often slightly eccentric. Therefore, the powder material layer formed by the stacking roller (hereinafter also referred to as the powder layer) is often slightly undulating in the up-down direction along the moving path of the stacking roller. The undulations of a plurality of powder layers along the moving path of the stacking roller have a randomly offset phase in the moving direction of the stacking roller. Therefore, when trying to shape a shaped object with a high precision in the up-down direction by making the powder layer thin, there is a risk that the stacking roller forming the upper layer will come too close to the lower layer and damage the lower layer.

The present invention has been made in view of this, and an object thereof is to provide a three-dimensional shaping apparatus capable of shaping a shaped object with a high precision in the up-down direction by reducing the thickness of the powder layer.

### SOLUTION TO PROBLEM

A three-dimensional shaping apparatus disclosed herein includes: a powder supply device including a supply table on which a powder material is placed; a shaping tank arranged in a first direction relative to the supply table, in which a shaped object is shaped from the powder material; a layer forming device that flattens, on the shaping tank, the powder material placed on the supply table; and a controller. The layer forming device includes: a stacking roller configured to be rotatable about an axis extending in a direction orthogonal to the first direction and provided at a predetermined height above the supply table and the shaping tank; a drive device that rotates the stacking roller about the axis; a detection device that detects a rotational position of the stacking roller about the axis; and a moving device that moves the stacking roller at least from above the supply table to above the shaping tank by moving the stacking roller and/or the supply table and the shaping tank. The controller includes: an acquiring section, and a stacking control section. The acquiring section acquires the rotational position of the stacking roller about the axis from the detection device. The stacking control section moves the stacking roller at least from above the supply table to above the shaping tank by controlling the moving device while rotating the stacking roller by controlling the drive device. The stacking control section controls the drive device based on the rotational position of the stacking roller acquired by the acquiring section so that a position of the stacking roller in the first direction and the rotational position of the stacking roller about the axis correspond to each other while moving over the shaping tank.

With the three-dimensional shaping apparatus, the rotational position of the stacking roller is made to correspond to the position thereof in the moving direction while moving over the shaping tank. Therefore, a plurality of powder layers have a matching phase of undulations along the moving path of the stacking roller. In other words, the distance in the up-down direction between the stacking roller while forming the upper layer and the lower layer is kept generally constant, and the stacking roller is prevented from coming close to the lower layer. Thus, with the three-dimensional shaping apparatus, it is possible to shape a shaped object with a high precision in the up-down direction by reducing the thickness of the powder layer.

### BRIEF DESCRIPTION OF DRAWINGS

FIG. **1** is a schematic cross-sectional view of a three-dimensional shaping apparatus according to one embodiment.
FIG. **2** is a schematic plan view of the three-dimensional shaping apparatus.
FIG. **3** is a block diagram of the three-dimensional shaping apparatus.
FIG. **4** is a schematic cross-sectional view of a powder layer showing undulations in the powder layer.
FIG. **5** is a schematic cross-sectional view showing the stack of a plurality of powder layers formed by a conventional three-dimensional shaping apparatus.
FIG. **6** is a flow chart for forming a powder layer.
FIG. **7** is a schematic cross-sectional view showing the stack of a plurality of powder layers formed by the three-dimensional shaping apparatus according to one embodiment.
FIG. **8** is a schematic side view of a detection device according to a first variation.
FIG. **9** is a schematic side view of a detection device according to a second variation.
FIG. **10** is a block diagram of a three-dimensional shaping apparatus according to a third variation.
FIG. **11** is a schematic cross-sectional view of a three-dimensional shaping apparatus according to another embodiment.
FIG. **12** is a schematic plan view of the three-dimensional shaping apparatus according to another embodiment.

### DESCRIPTION OF EMBODIMENTS

A three-dimensional shaping apparatus according to an embodiment of the present invention will now be described with reference to the drawings. Note that, needless to say, the embodiment described herein is not intended to limit the present invention in any particular way. Members and sections of the same functions are denoted by the same reference signs, and redundant explanations will be omitted or simplified as appropriate.

### [Configuration of three-dimensional shaping apparatus]

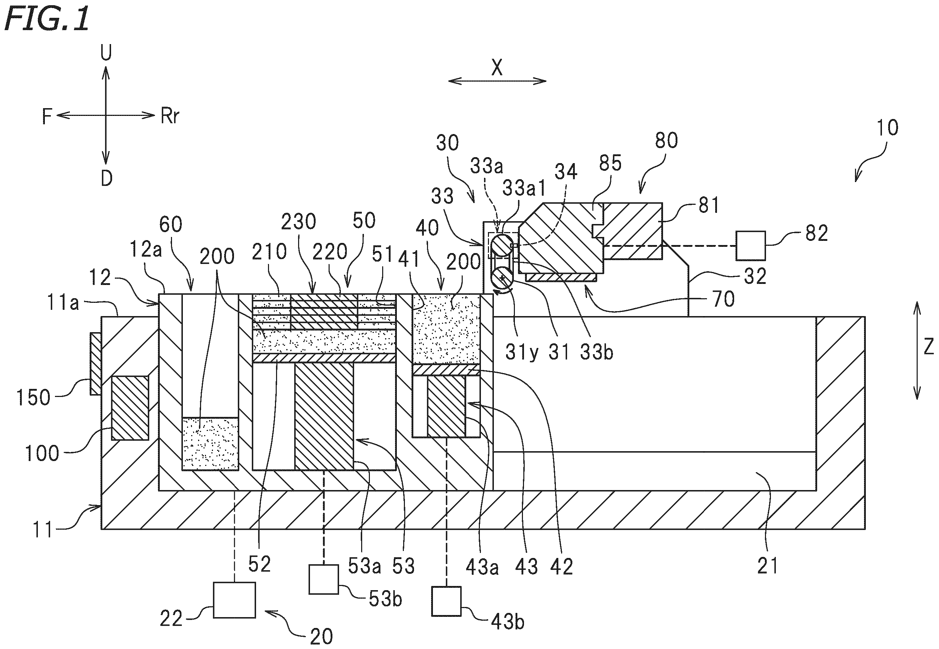

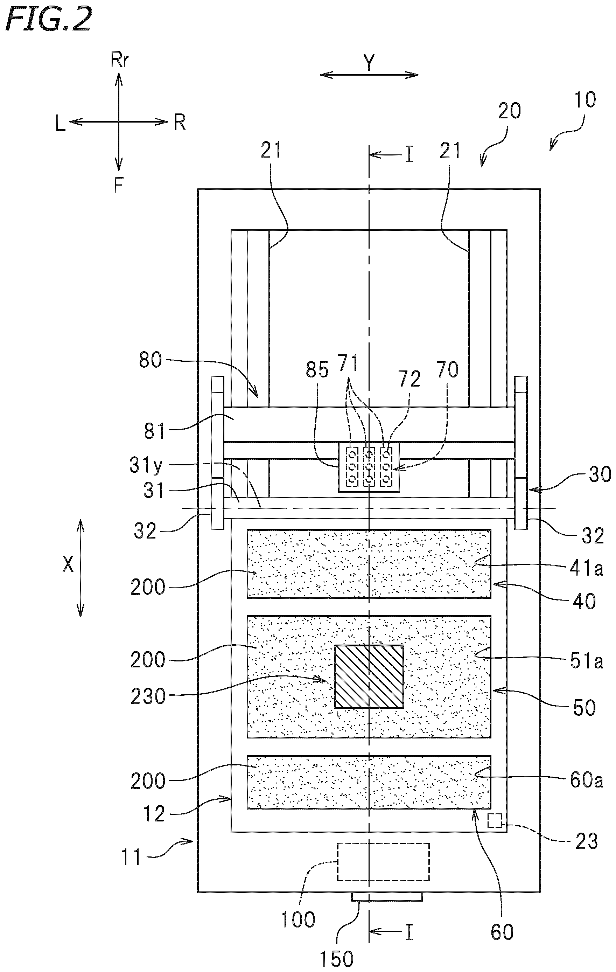

FIG. **1** is a schematic cross-sectional view of a three-dimensional shaping apparatus **10** according to one embodiment. FIG. **2** is a schematic plan view of the three-dimensional shaping apparatus **10.** FIG. **1** is a cross-sectional view taken along line I-I of FIG. **2****.** Reference sign F in the drawings indicates forward, and Rr indicates rearward. Here, left, right, up and down as the three-dimensional shaping apparatus **10** is viewed from the direction of reference sign F are left, right, up and down, respectively, of the three-dimensional shaping apparatus **10.** Reference signs L, R, U and D in the drawings denote left, right, up and down, respectively. Reference signs X, Y and Z denote the front-rear direction, the left-right direction and the up-down direction, respectively. The left-right direction **Y** is the primary scanning direction of the three-dimensional shaping apparatus **10.** The front-rear direction **X** is the secondary scanning direction of the three-dimensional shaping apparatus **10.** The up-down direction **Z** is the stacking direction in three-dimensional shaping. The primary scanning direction **Y,** the secondary scanning direction **X,** and the up-down direction **Z** are orthogonal to each other. Note however that these directions are defined only for the purpose of discussion, and do not limit in any way how the three-dimensional shaping apparatus **10** is installed.

As shown in FIG. **1****,** the three-dimensional shaping apparatus **10** includes a main body **11,** a shaping tank unit **12,** a roller unit **30,** a carriage **85,** a head unit **70,** a secondary scanning direction moving device **20,** a primary scanning direction moving device **80,** and a controller **100.** The shaping tank unit **12** has a supply tank **40,** a shaping tank **50,** and a powder collection tank **60.** The three-dimensional shaping apparatus **10** forms a powder layer **210** by flattening, on the shaping tank **50,** the powder material **200** supplied from the supply tank **40,** and discharges a curing liquid at a desired location of a powder layer **210** to cure the powder layer **210,** thereby forming a cured layer **220.** Then, such cured layers **220** are stacked upward to shape a shaped object **230.**

As shown in FIG. **2****,** the main body **11** is an external body of the three-dimensional shaping apparatus **10** having a shape elongated in the secondary scanning direction **X.** The main body **11** is formed in a box shape that is open upward. The main body **11** houses the secondary scanning direction moving device **20,** the shaping tank unit **12,** and the controller **100.** As shown in FIG. **1****,** the main body **11** supports the roller unit **30** and the primary scanning direction moving device **80.**

As shown in FIG. **1****,** the shaping tank unit **12** is housed in the main body **11.** The upper surface **12a** of the shaping tank unit **12** is flat, and the shaping tank **50,** the supply tank **40,** and the powder collection tank **60** are provided side by side and independent of each other so as to be recessed from the upper surface **12a.**

The supply tank **40** is arranged at the rear side of the shaping tank unit **12.** The supply tank **40** stores the powder material **200** before being supplied to the shaping tank **50.** The supply tank **40** is an example of a powder supply device that supplies the powder material **200,** which is the material of the shaped object **230.** As shown in FIG. **1****,** the supply tank **40** has a cylindrical portion **41** formed in a cylindrical shape extending in the up-down direction. As shown in FIG. **2****,** the cylindrical portion **41** has an opening **41a** that is open upward. The shape of the opening **41a** is rectangular as viewed from above. Note however that the planar shape of the opening **41a** is not limited to rectangular.

There is no particular limitation on the composition, form, etc., of the powder material **200,** and it may be a powder composed of various materials such as resin materials, metal materials, and inorganic materials. The powder material **200** may be, for example, a ceramic material such as alumina, silica, titania, zirconia, etc., iron, aluminum, titanium and an alloy thereof (typically stainless steel, titanium alloy, aluminum alloy), semi-hydrated gypsum (α plaster, β plaster), apatite, salt, plastic, etc. These may be composed of any one material or a combination of two or more. When the powder material **200** is a mixed powder, the particle sizes of the component powders may be different. For example, the powder to be the binder may be finer than the powder to be the aggregate material.

A supply table **42** that is the same shape as the cylindrical portion **41** as viewed from above is housed inside the cylindrical portion **41.** As shown in FIG. **1****,** the supply table **42** has the shape of a flat plate. The supply table **42** is inserted generally horizontally into the cylindrical portion **41.** The powder material **200** is placed on the supply table **42.** While the required amount of the powder material **200** is placed on the supply table **42** in advance in the present embodiment, the powder material **200** may be supplied as needed onto the supply table **42** from a storage tank provided outside the supply table **42,** for example. The supply table **42** is configured so that the supply table **42** can be freely raised and lowered in the up-down direction inside the cylindrical portion **41.** A supply table elevation device **43** is provided downward of the supply table **42.** The supply table elevation device **43** is configured to support and raise and lower the supply table **42.** The supply table elevation device **43** herein supports the supply table **42** from below. The supply table elevation device **43** includes a support **43a,** an elevation motor **43b,** and a ball screw (not shown). The support **43a** is connected to the bottom surface of the supply table **42.** The support **43a** is connected to the elevation motor **43b** via a ball screw. By driving the elevation motor **43b,** the support **43a** is moved in the up-down direction. The supply table **42** is supported by the support **43a** and moves together with the support **43a** in the up-down direction. The elevation motor **43b** is electrically connected to the controller **100,** and controlled by the controller **100.** The elevation motor **43b** is a servo motor, for example, and is configured to control the height of the supply table **42.**

As shown in FIG. **2****,** the shaping tank **50** is arranged forward of the supply tank **40.** The supply tank **40** and the shaping tank **50** are arranged in line in the secondary scanning direction **X.** The shaping tank **50** is arranged in alignment with the supply tank **40** for the primary scanning direction **Y.** The shaping tank **50** is formed in a box shape, and has an opening at least partially. Specifically, the shaping tank **50** has a cylindrical portion **51** (see FIG. **1****)** formed in a cylindrical shape extending in the up-down direction, and the cylindrical portion **51** has an opening **51a** that is open upward. The shaping tank **50** houses the powder material **200.** The shaping tank **50** is a tank in which the shaped object **230** is shaped from the powder material **200.** As shown in FIG. **2****,** the shape of the opening **51a** is rectangular as viewed from above. Note however that the planar shape of the opening **51a** is not limited to rectangular. As viewed from above, the length of the opening **51a** in the primary scanning direction **Y** is the same as the length of the opening **41a** of the supply tank **40** in the primary scanning direction **Y.** However, the length of the opening **51a** of the shaping tank **50** in the primary scanning direction **Y** may be shorter than the length of the opening **41a** of the supply tank **40** in the primary scanning direction **Y.**

As shown in FIG. **1****,** a shaping table **52** that is the same shape as the cylindrical portion **51** as viewed from above is housed inside the cylindrical portion **51.** When shaping the shaped object **230,** the powder material **200** is supplied to the shaping table **52,** and the shaping is done on the shaping table **52.** As shown in FIG. **1****,** the shaping table **52** has the shape of a flat plate. The shaping table **52** is inserted generally horizontally into the cylindrical portion **51.** The shaping table **52** is configured so that the shaping table **52** can be freely raised and lowered in the up-down direction inside the cylindrical portion **51.** A shaping table elevation device **53** is provided downward of the shaping table **52.** The shaping table elevation device **53** is configured to support and raise and lower the shaping table **52.** The shaping table elevation device **53** herein supports the shaping table **52** from below. The shaping table elevation device **53** includes a support **53a,** an elevation motor **53b,** and a ball screw (not shown). The support **53a** is connected to the bottom surface of the shaping table **52.** The support **53a** is connected to the elevation motor **53b** via a ball screw. By driving the elevation motor **53b,** the support **53a** is moved in the up-down direction. The shaping table **52** is supported by the support **53a** and moves together with the support **53a** in the up-down direction. The elevation motor **53b** is electrically connected to the controller **100,** and controlled by the controller **100.** The elevation motor **53b** is a servo motor, for example, and is configured to control the height of the shaping table **52.**

The powder collection tank **60** is a tank for collecting the powder material **200** that cannot be fully housed in the shaping tank **50** when the powder material **200** is bedded in the shaping tank **50.** The powder collection tank **60** is arranged forward of the shaping tank **50.** As shown in FIG. **2****,** the powder collection tank **60** is arranged in line with the shaping tank **50** and the supply tank **40** in the secondary scanning direction **X.** The powder collection tank **60** is arranged in alignment with the shaping tank **50** for the primary scanning direction **Y.** The powder collection tank **60** has an opening **60a** that is open upward. The shape of the opening **60a** is rectangular as viewed from above. Note however that the planar shape of the opening **60a** is not limited to rectangular. As viewed from above, the length of the opening **60a** in the primary scanning direction **Y** is the same as the length of the opening **41a** of the supply tank **40** and the opening **51a** of the shaping tank **50** in the primary scanning direction **Y.** However, the length of the opening **60a** of the powder collection tank **60** in the primary scanning direction **Y** may be longer than the length of the opening **51a** of the shaping tank **50** in the primary scanning direction **Y.**

The secondary scanning direction moving device **20** and the roller unit **30** together form a layer forming device that flattens, on the shaping tank **50,** the powder material **200** placed on the supply table **42.** As shown in FIG. **1** and FIG. **2****,** the roller unit **30** includes a stacking roller **31,** a pair of roller support members **32** supporting the stacking roller **31,** a drive device **33** for rotating the stacking roller **31,** and a detection device **34** for detecting the rotational position of the stacking roller **31.** As shown in FIG. **1****,** the stacking roller **31** is arranged upward of the main body **11.** The stacking roller **31** is a roller that pushes the powder material **200** from on the supply table **42** to the shaping tank **50** and beds the powder material **200** on the shaping tank **50.** The stacking roller **31** is arranged forward of the head unit **70.** The stacking roller **31** has a long cylindrical shape extending in the primary scanning direction **Y.** The length of the stacking roller **31** in the primary scanning direction **Y** is longer than the length of the shaping tank **50** in the primary scanning direction **Y.** The stacking roller **31** is provided at a predetermined height upward relative to the supply table **42** and the shaping tank **50.** The lower end of the stacking roller **31** is installed slightly upward of the shaping tank unit **12** so that a predetermined clearance (gap) is formed between the lower end of the stacking roller **31** and the upper surface **12a** of the shaping tank unit **12.**

The stacking roller **31** is configured to be rotatable about an axis **31y** extending in the primary scanning direction **Y.** The pair of roller support members **32** support the stacking roller **31** so that the stacking roller **31** is rotatable about the axis **31y** and is at the predetermined position in the up-down direction. The pair of roller support members **32** are provided on the upper surface **11a** of the main body **11.**

The drive device **33** rotates the stacking roller **31** about the axis **31y.** The drive device **33** herein includes a drive motor **33a** and an endless belt **33b.** The belt **33b** is wound around the rotation shaft **33a1** of the drive motor **33a** and the stacking roller **31.** The drive motor **33a** is connected to the stacking roller **31** via the belt **33b.** Note however that the drive motor **33a** may be directly connected to the stacking roller **31,** or may be connected to the stacking roller **31** via gears, etc. The stacking roller **31** is rotated in the opposite direction (here, clockwise as viewed from the right side; see arrow in FIG. **1****)** to the direction of movement of the roller unit **30** relative to the shaping tank **50** (here, the forward direction) when the powder material **200** is bedded in the shaping tank **50.**

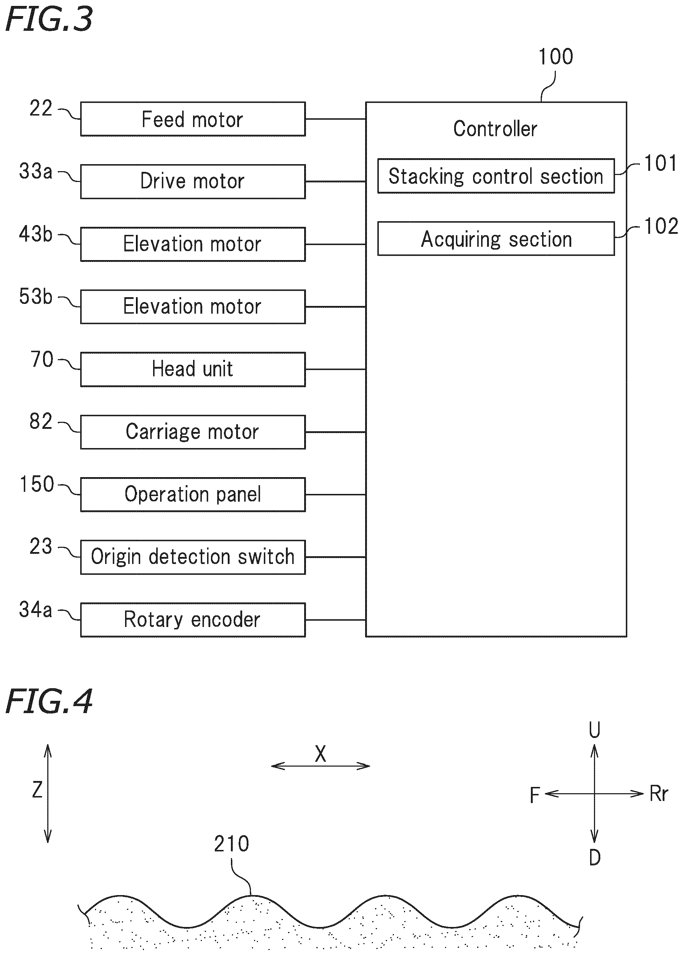

The detection device **34** detects the rotational position of the stacking roller **31** about the axis **31y.** In the present embodiment, the stacking roller **31** has an origin of rotation, and the detection device **34** is configured to be capable of detecting whether at least the stacking roller **31** is at the origin of rotation. In the present embodiment, the detection device **34** includes a rotary encoder **34a** (see FIG. **3****)** that detects the rotational position of the drive motor **33a.** The rotary encoder **34a** is built in the drive motor **33a.** Here, the drive motor **33a** is a motor that can determine the absolute rotational position, and can determine whether it is located at the origin as the absolute rotational position. The drive motor **33a** is a servo motor, for example, and is configured to be capable of controlling the rotation speed and the stop position.

The secondary scanning direction moving device **20** is configured to move the shaping tank unit **12** in the secondary scanning direction **X** relative to the head unit **70** and the roller unit **30.** As shown in FIG. **2****,** the secondary scanning direction moving device **20** includes a pair of guide rails **21,** a feed motor **22** (see FIG. **1****),** and an origin detection switch **23.**

As shown in FIG. **1****,** the guide rails **21** guide the shaping tank unit **12** in the secondary scanning direction **X.** The guide rails **21** are provided in the main body **11.** The guide rails **21** extend in the secondary scanning direction **X.** The shaping tank unit **12** is slidably engaged with the guide rails **21.** Note however that there is no particular limitation on the position and the number of guide rails **21** installed. The feed motor **22** is connected to the shaping tank unit **12** via a ball screw, for example. The feed motor **22** is electrically connected to the controller **100.** The shaping tank unit **12** is moved in the secondary scanning direction **X** on the guide rails **21** by the rotation of the feed motor **22.** The origin detection switch **23** is a switch that detects when the secondary scanning direction moving device **20** is at the origin of movement. The origin of movement is set in the secondary scanning direction moving device **20.** Here, the origin position of the secondary scanning direction moving device **20** is the most forward position in the movable range of the shaping tank unit **12.** Note however that the origin position of the secondary scanning direction moving device **20** is not limited to the end position of the movable range. Here, as shown in FIG. **1****,** when the secondary scanning direction moving device **20** is at the origin of movement, the stacking roller **31** is located rearward relative to the supply table **42.**

As the shaping tank unit **12** is moved rearward by the secondary scanning direction moving device **20,** the stacking roller **31** moves forward relative to the supply tank **40,** the shaping tank **50,** and the powder collection tank **60.** Therefore, the stacking roller **31** moves from above the supply tank **40,** over the shaping tank **50,** to above the powder collection tank **60.** At this time, the stacking roller **31** moves from above the supply tank **40** to above the powder collection tank **60** while maintaining a predetermined height above the supply tank **40,** the shaping tank **50,** and the powder collection tank **60.** Note however that the secondary scanning direction moving device **20** may move the stacking roller **31** in the secondary scanning direction **X** instead of the shaping tank unit **12** or in addition to the shaping tank unit **12.** There is no limitation on the secondary scanning direction moving device **20** as long as the secondary scanning direction moving device **20** is configured to move the stacking roller **31** at least from above the supply table **42** to above the shaping tank **50** by moving the stacking roller **31** and/or the supply table **42** and the shaping tank **50.**

As shown in FIG. **2****,** the head unit **70** is provided on the bottom surface of the carriage **85.** The head unit **70** is provided so as to oppose the opening **51a** of the shaping tank **50.** The head unit **70** is configured to discharge a curing liquid for curing the powder material **200** toward the opening **51a.** There is no particular limitation on the mechanism for discharging the curing liquid in the head unit **70,** and an inkjet type can be suitably used, for example. The head unit **70** is electrically connected to the controller **100,** and controlled by the controller **100.**

As shown in FIG. **2****,** the head unit **70** includes a plurality of discharge heads **71.** The plurality of discharge heads **71** are arranged in line in the primary scanning direction **Y.** The plurality of discharge heads **71** each include a plurality of nozzles **72** arranged in line in the secondary scanning direction **X.** In a discharge head **71,** a plurality of nozzles **72** have a row of nozzles extending in the secondary scanning direction **X.** Each nozzle **72** is configured to discharge the curing liquid.

There is no particular limitation on the curing liquid as long as it is a material capable of adhering together the powder material **200.** Depending on the type of powder material **200,** the curing liquid may be a liquid (including a viscous material) capable of bonding together the particles of the powder material **200.** Examples of the curing liquid are liquids including water, wax, binders or the like. If the powder material **200** has a water-soluble resin as a secondary material, a liquid capable of dissolving the water-soluble resin, e.g., water, can be used as the curing liquid. While there is no particular limitation on such water-soluble resins, examples include starch, polyvinyl alcohol (PVA), polyvinyl pyrrolidone (PVP), water-soluble acrylic resin, water-soluble urethane resin, water-soluble polyamide, etc.

The main scanning direction moving device **80** moves the carriage **85** in the primary scanning direction **Y.** As shown in FIG. **2****,** the primary scanning direction moving device **80** includes a guide rail **81.** The guide rail **81** extends in the primary scanning direction **Y.** The carriage **85** is slidably engaged with the guide rail **81.** The carriage **85** is connected to a carriage motor **82** (see FIG. **1****)** via an endless belt and pulley, for example. When the carriage motor **82** is driven, the carriage **85** moves along the guide rail **81** in the primary scanning direction **Y.** The carriage motor **82** is electrically connected to the controller **100,** and controlled by the controller **100.** As the carriage **85** moves in the primary scanning direction **Y,** the head unit **70** also moves in the primary scanning direction **Y.**

As shown in FIG. **1****,** an operation panel **150** is provided on the front surface of the main body **11.** The operation panel **150** includes a display showing the status of the apparatus, and input keys to be operated by the user, etc. The operation panel **150** is connected to the controller **100** for controlling various operations of the three-dimensional shaping apparatus **10.** FIG. **3** is a block diagram of the three-dimensional shaping apparatus **10.** As shown in FIG. **3****,** the controller **100** is electrically connected to the feed motor **22,** the drive motor **33a** of the roller unit **30,** the elevation motor **43b** of the supply table elevation device **43,** the elevation motor **53b** of the shaping table elevation device **53,** the head unit **70,** and the carriage motor **82,** and controls their operations. The controller **100** is electrically connected to the origin detection switch **23** of the secondary scanning direction moving device **20** and the rotary encoder **34a** of the roller unit **30,** and receives signals from these components.

There is no particular limitation on the configuration of the controller **100.** The controller **100** is a microcomputer, for example. While there is no particular limitation on the hardware configuration of the microcomputer, the microcomputer includes an interface (I/F) for receiving shaping data, etc., from external devices such as a host computer, for example, a central processing unit (CPU) for executing instructions of the control program, a ROM (read only memory) storing a program to be executed by the CPU, a RAM (random access memory) used as a working area for expanding the program, and a storage device such as a memory that stores the program and various data. Note that the controller **100** does not need to be installed inside the three-dimensional shaping apparatus **10,** but the controller **100** may be a computer, etc., installed outside the three-dimensional shaping apparatus **10** and connected to the three-dimensional shaping apparatus **10** for communication via a wired or wireless connection with the three-dimensional shaping apparatus **10,** for example.

As shown in FIG. **3****,** the controller **100** includes a stacking control section **101** that controls the operation of forming the powder layer **210,** and an acquiring section **102** that acquires the rotational position of the stacking roller **31** about the axis **31y** from the detection device **34.** The controller **100** may include other processing sections, such as a control section for controlling the operation of discharging the curing liquid, but they are neither shown in the figures nor described here.

The stacking control section **101** controls the secondary scanning direction moving device **20** to move the stacking roller **31** from above the supply table **42,** over the shaping tank **50,** to above the powder collection tank **60,** while controlling the drive device **33** to rotate the stacking roller **31.** The stacking control section **101** is configured to control the drive device **33** based on the rotational position of the stacking roller **31** acquired by the acquiring section **102** so that the position of the stacking roller **31** in the secondary scanning direction **X** and the rotational position of the stacking roller **31** about the axis **31y** correspond to each other while moving over the shaping tank **50.** Thus, the rotational position of the stacking roller **31** uniquely corresponds to the position of the stacking roller **31** in the secondary scanning direction **X.** In the present embodiment, the stacking control section **101** achieves a state where the secondary scanning direction moving device **20** is moved to the origin of movement and the stacking roller **31** is moved to the origin of rotation, and from that state, move the stacking roller **31** at a predetermined moving speed while rotating the stacking roller **31** at a predetermined rotation speed. Thus, the rotational position of the stacking roller **31** uniquely corresponds to the position of the stacking roller **31** in the secondary scanning direction **X.**

### [Outline of shaping process]

The three-dimensional shaping apparatus **10** shapes a three-dimensional shaped object **230** in a process as follows, for example. According to one preferred process, the three-dimensional shaping apparatus **10** raises the supply table **42** and lowers the shaping table **52** when the formation of one cured layer **220** is completed. When the formation of one cured layer **220** is completed, the upper surface of the powder material **200** on the supply table **42** is at the same height as the height of the lower end portion of the stacking roller **31.** At this time, the upper surface of the cured layer **220** formed at the top in the shaping tank **50** is also at the same height as the height of the lower end portion of the stacking roller **31.**

As the supply table **42** is raised from this state, some of the upper side of the powder material **200** overflows from the supply tank **40.** This powder material **200** having overflown from the supply tank **40** is the powder material **200** supplied from the supply tank **40.** The shaping table **52** is lowered by a predetermined distance from this state. This predetermined distance is the same as the thickness of the cured layer **220** to be formed next. The shaping table **52** is lowered by the thickness of one cured layer **220** when the powder material **200** is supplied.

Then, the three-dimensional shaping apparatus **10** moves the stacking roller **31** forward relative to the shaping tank unit **12.** At this time, the stacking roller **31** is actually unmoved and the shaping tank unit **12** moves rearward. By this relative movement, the stacking roller **31** moves from behind the supply tank **40,** over the supply tank **40** and the shaping tank **50,** to above the powder collection tank **60.** At this time, the stacking roller **31** rotates in the opposite direction to the direction of movement. As a result of the movement and the rotation of the stacking roller **31,** new powder material **200** is bedded on the shaping table **52.** Thus, a new powder layer **210** is formed on the shaping table **52.** The powder material **200** that is not bedded on the shaping tank **52** falls into the powder collection tank **60.**

The three-dimensional shaping apparatus **10** forms a new powder layer **210** on the cured layer **220** as described above, and sequentially discharges the curing liquid at a predetermined location on the powder layer **210.** Thus, a new cured layer **220** is formed on the powder layer **210.** By repeating this process, the shaped object **230** is completed. Note that this process is merely a preferred example, and the process of forming the shaped object **230** is not limited to this.

### [Formation of powder layer]

In the formation of the powder layer **210,** undulations occur in the powder layer **210** due to the eccentricity of the stacking roller **31.** FIG. **4** is a schematic cross-sectional view of the powder layer **210** showing undulations in the powder layer **210.** As shown in FIG. **4****,** the stacking roller **31** rotates while moving forward relative to the shaping tank **50,** and its rotation is eccentric. The eccentricity causes the stacking roller **31** to oscillate in the up-down direction. According to the findings of the present inventor, the eccentricity of the stacking roller **31** is at least about 50 µm. Therefore, as shown in FIG. **4****,** the powder layer **210** slightly undulates in the up-down direction along the moving path of the stacking roller **31.**

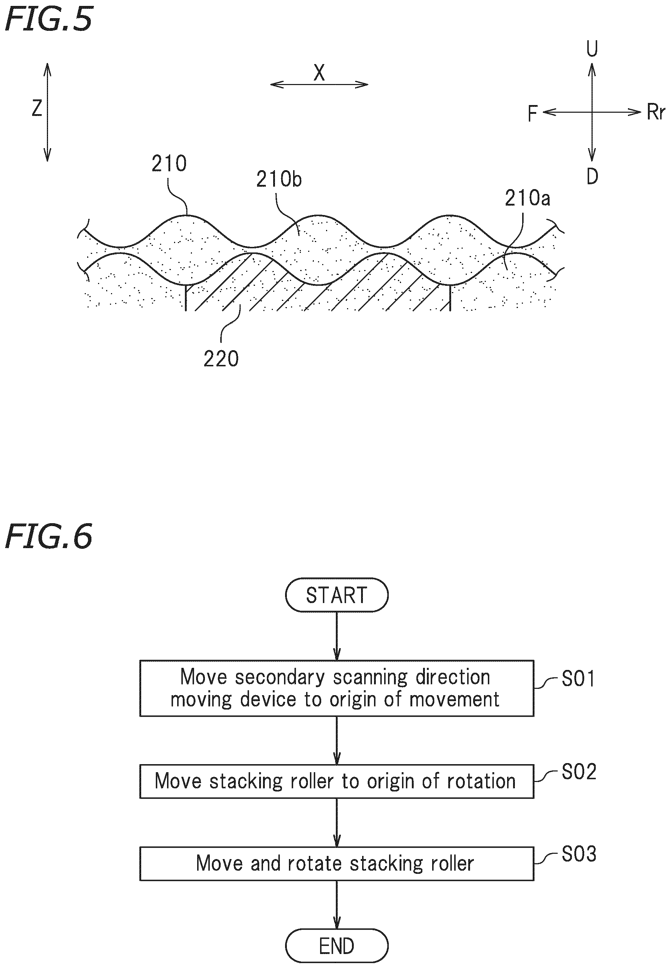

FIG. **5** is a schematic cross-sectional view showing the stack of a plurality of powder layers **210** formed by a conventional three-dimensional shaping apparatus. With the conventional three-dimensional shaping apparatus, the position of the stacking roller in the secondary scanning direction **X** and the rotational position are not controlled to be associated with each other. Therefore, undulations along the moving path of the stacking roller in a plurality of powder layers (the lower layer is denoted by reference sign **210a** and the upper layer by reference **sign210b** in FIG. **5****)** have a randomly offset phase in the secondary scanning direction **X.** FIG. **5** illustrates a state where the peaks of a lower layer **210a** are aligned with the valleys of the upper layer **210b.** In such a state, the upper layer **210b** and the lower layer **210a** of the powder layer **210** are closest to each other in the up-down direction.

With such a conventional three-dimensional shaping apparatus, if one attempts to shape a shaped object with a high precision in the up-down direction by making the powder layers **210** thin, the stacking roller while forming the upper layer **210b** may come too close to the lower layer **210a** and damage the lower layer **210a** and the cured layer **220.** Therefore, the powder layer **210** could not be made very thin.

In view of such an issue, the three-dimensional shaping apparatus **10** according to the present embodiment is configured so that the powder layer **210** can be formed thinner than before. Thus, it is possible to shape the shaped object **230** with a high precision in the up-down direction. FIG. **6** is a flow chart showing the process of forming the powder layer **210** using the three-dimensional shaping apparatus **10** according to the present embodiment. As shown in FIG. **6****,** in the present embodiment, in step S01 of forming the powder layer **210,** the secondary scanning direction moving device **20** is moved to the origin of movement. Here, the stacking roller **31** is relatively moved to the end position on the rear side relative to the supply table **42** and the shaping tank **50.** In the following step S02, the stacking roller **31** is rotated to the origin of rotation. This forms the state in which the secondary scanning direction moving device **20** is moved to the origin of movement and the stacking roller **31** is moved to the origin of rotation. The stacking roller **31** having moved to the origin of rotation is detected by the detection device **34.**

In step S03, from the state formed in step S02, the stacking roller **31** is moved at a predetermined moving speed and rotated at a predetermined rotation speed. This starts the formation of the powder layer **210.** Note that "predetermined moving speed" and "predetermined rotation speed" of the stacking roller **31** mean a moving speed and a rotation speed that are reproducible and do not necessarily need to be constant.

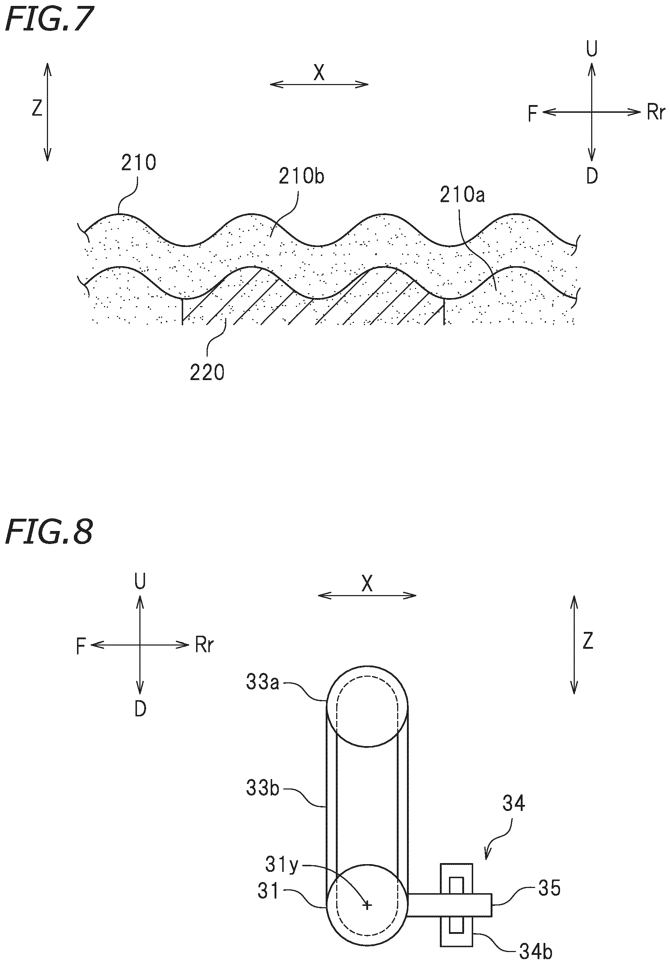

FIG. **7** is a schematic cross-sectional view showing the stack of a plurality of powder layers **210** (the lower layer is denoted by reference sign **210a** and the upper layer by reference sign **210b** as in FIG. **5****)** formed by the three-dimensional shaping apparatus **10** according to the present embodiment. As shown in FIG. 7, the powder layers **210a** and **210b** formed by the three-dimensional shaping apparatus **10** according to the present embodiment have a matching phase of undulations along the moving path of the stacking roller **31.** That is, the lower layer **210a** and the upper layer **210b** are roughly parallel to each other along the moving path of the stacking roller **31.** In other words, the distance in the up-down direction between the stacking roller **31** while forming the upper layer **210b** and the lower layer **210a** is kept generally constant. Unlike the conventional example shown in FIG. **5****,** the stacking roller **31** forming the upper layer **210b** does not move closer to or away from the lower layer **210a.** Therefore, with the three-dimensional shaping apparatus **10** according to the present embodiment, even if the thickness of the upper layer **210b** is reduced, for example, it is possible to prevent the stacking roller **31** forming the upper layer **210b** from coming close to the lower layer **210a** to damage the lower layer **210a** and the cured layer **220.** Therefore, with the three-dimensional shaping apparatus **10** according to the present embodiment, it is possible to shape the shaped object **230** with a high precision in the up-down direction by reducing the thickness of the powder layer **210.**

### [Functions/effects of embodiment]

The functions/effects that can be realized by the three-dimensional shaping apparatus **10** according to the present embodiment will now be described. The three-dimensional shaping apparatus **10** according to the present embodiment includes the stacking roller **31** configured to be rotatable about the axis **31y** extending in the primary scanning direction **Y** and provided at a predetermined height above the supply table **42** and the shaping tank **50,** the drive device **33** that rotates the stacking roller **31** about the axis **31y,** the detection device **34** that detects the rotational position of the stacking roller **31** about the axis **31y,** and the secondary scanning direction moving device **20** that moves the stacking roller **31** at least from above the supply table **42** to above the shaping tank **50.** The controller **100** includes the stacking control section **101** that controls the secondary scanning direction moving device **20** to move the stacking roller **31** at least from above the supply table **42** to above the shaping tank **50** and controls the drive device **33** to rotate the stacking roller **31,** and the acquiring section **102** that acquires the rotational position of the stacking roller **31** about the axis **31y** from the detection device **34.** The stacking control section **101** is configured to control the drive device **33** based on the rotational position of the stacking roller **31** acquired by the acquiring section **102** so that the position of the stacking roller **31** in the secondary scanning direction **X** and the rotational position of the stacking roller **31** about the axis **31y** correspond to each other while moving over the shaping tank **50.**

With such a configuration, it is possible, for the aforementioned reasons, to shape the shaped object **230** with a high precision in the up-down direction by reducing the thickness of the powder layer **210.**

In the present embodiment, the origin of movement is set for the secondary scanning direction moving device **20** and the origin of rotation is set for the stacking roller **31.** The stacking control section **101** achieves a state where the secondary scanning direction moving device **20** is moved to the origin of movement and the stacking roller **31** is moved to the origin of rotation, and from that state, move the stacking roller **31** at a predetermined moving speed while rotating the stacking roller **31** at a predetermined rotation speed. With such a configuration, it is easy to realize a control such that the position of the stacking roller **31** in the secondary scanning direction **X** and the rotational position of the stacking roller **31** about the axis **31y** correspond to each other while moving over the shaping tank **50.**

More specifically, in the present embodiment, the drive device **33** includes the drive motor **33a** connected to the stacking roller **31,** and the detection device **34** includes the rotary encoder **34a** built in the drive motor **33a** to detect the rotational position of the drive motor **33a.** With such a configuration, by selecting the drive motor **33a** having the rotary encoder **34a** that detects the rotational position of the drive motor **33a,** it is possible to move the stacking roller **31** to the origin of rotation without providing any other component. Thus, the configuration of the three-dimensional shaping apparatus **10** can be simplified.

### [First variation]

Some variations of embodiment described above will now be described. First, the first variation will be described. Note that in the following description of variations, members of the same functions to those of the embodiment described above are denoted by the same reference signs, and redundant explanations will be omitted or simplified as appropriate. This similarly applies to the description of other embodiments.

FIG. **8** is a schematic side view of the detection device **34** according to the first variation. As shown in FIG. **8****,** in this variation, the three-dimensional shaping apparatus **10** includes a detected member **35** which is fixed to the stacking roller **31** and rotates together with the stacking roller **31** to indicate the origin of rotation of the stacking roller **31.** Here, the detected member **35** is a plate-shaped member extending in the radial direction of the stacking roller **31.** As shown in FIG. **8****,** the detection device **34** includes a sensor **34b** that detects whether the detected member **35** is at the origin of rotation. The sensor **34b** is, for example, a photo interrupter. Note however that there is no particular limitation on the type of the sensor **34b.** The sensor **34b** may be, for example, a mechanical switch that is pressed by the detected member **35.** The detected member **35** may be, for example, a member with a slit formed at the origin of rotation. There is no particular limitation on the shape, etc., of the detected member **35.** In this variation, the three-dimensional shaping apparatus **10** detects that the stacking roller **31** is at the origin of rotation by the sensor **34b** detecting that the detected member **35** is at the origin of rotation.

Also with such a configuration, it is possible to easily detect that the stacking roller **31** is at the origin of rotation.

### [Second variation]

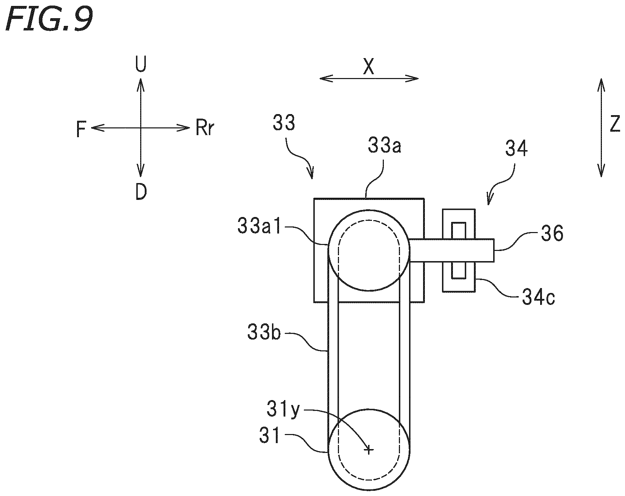

FIG. **9** is a side view of the detection device **34** for the second variation. In this variation, the drive device **33** has the rotation shaft **33a1** connected to the stacking roller **31.** Here, the rotation shaft **33a1** is the rotation shaft of the drive motor **33a.** As shown in FIG. **9****,** the three-dimensional shaping apparatus **10** includes a detected member **36** which is fixed to the rotation shaft **33a1** and rotates together with the rotation shaft **33a1** to indicate the origin of rotation of the rotation shaft **33a1.** The detection device **34** includes a sensor **34c** that detects whether the detected member **36** is at the origin of rotation. The detected member **36** and the sensor **34c** may be the same as or different from the detected member **35** and the sensor **34b** of the first variation. Also with such a configuration, it is possible to easily detect that the stacking roller **31** is at the origin of rotation. Here, the diameter of the portion of the drive motor **33a** around which the belt **33b** is wound is the same as the diameter of the portion of the stacking roller **31** around which the belt **33b** is wound. Thus, the amount of rotation of the drive motor **33a** and the amount of rotation of the stacking roller **31** are the same (gear ratio of 1:1). If the number of revolutions of the drive motor **33a** and the number of revolutions of the stacking roller **31** are set to be the same, it is possible to detect that the stacking roller **31** is at the origin of rotation by the same control as the first variation. Note however that the number of revolutions of the drive motor **33a** and the number of revolutions of the stacking roller **31** may be different (the gear ratio does not need to be 1: 1).

### [Third variation]

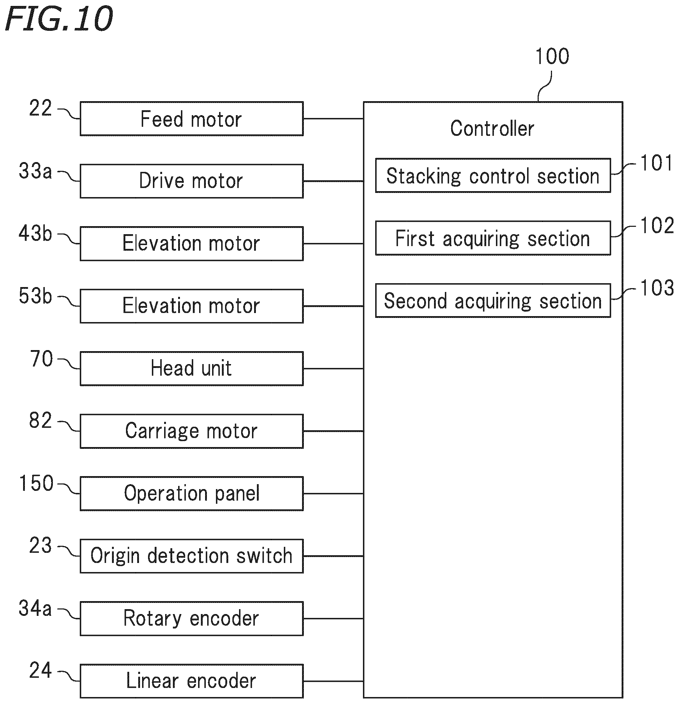

In the third variation, the position of the stacking roller **31** in the secondary scanning direction **X** and the rotational position of the stacking roller **31** about the axis **31y** are controlled while the stacking roller **31** is moving and rotating. FIG. **10** is a block diagram of the three-dimensional shaping apparatus **10** according to the third variation. As shown in FIG. **10****,** in this variation, the three-dimensional shaping apparatus **10** includes a linear encoder **24** that detects the position of the stacking roller **31** in the secondary scanning direction **X.** As in the first embodiment, the detection device **34** includes the rotary encoder **34a** that is built in the drive motor **33a** and detects the rotational position of the drive motor **33a.** The controller **100** includes a second acquiring section **103** that acquires the position of the stacking roller **31** in the secondary scanning direction **X** from the linear encoder **24.** Note that the acquiring section **102** in the first embodiment is referred to as the "first acquiring section **102"** in FIG. **10****.** The stacking control section **101** controls the drive device **33** and the secondary scanning direction moving device **20** so that the position of the stacking roller **31** in the secondary scanning direction **X** detected by the linear encoder **24** and acquired by the second acquiring section **103** and the rotational position of the stacking roller **31** detected by the rotary encoder **34a** and acquired by the first acquiring section **102** are synchronized with each other. Thus, the stacking control section **101** makes the position of the stacking roller **31** in the secondary scanning direction **X** and the rotational position of the stacking roller **31** about the axis **31y** correspond to each other while moving over the shaping tank **50.**

With such a configuration, the position of the stacking roller **31** in the secondary scanning direction **X** and the rotational position of the stacking roller **31** about the axis **31y** can be made to correspond to each other with a higher precision, without being affected by variations in the moving speed or rotational speed of the stacking roller **31.**

Some preferred embodiments of the present invention have been described above. However, the embodiments described above are merely examples, and the present invention can be carried out in various other forms.

For example, in the embodiments described above, the head unit is mounted on a carriage that moves in the primary scanning direction. However, the three-dimensional shaping apparatus may be configured to be of a so-called line head type. In that case, the head unit may include a plurality of rows of nozzles each extending in the primary scanning direction, and may be unmoved for the primary scanning direction. The plurality of rows of nozzles may be arranged in line in the secondary scanning direction. The moving device may move the head unit and the roller unit instead of the shaping tank unit.

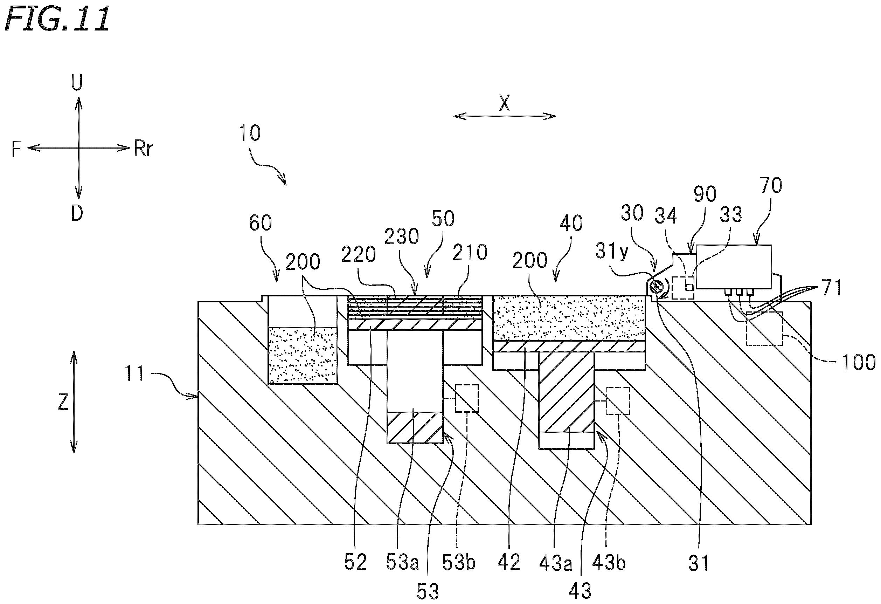

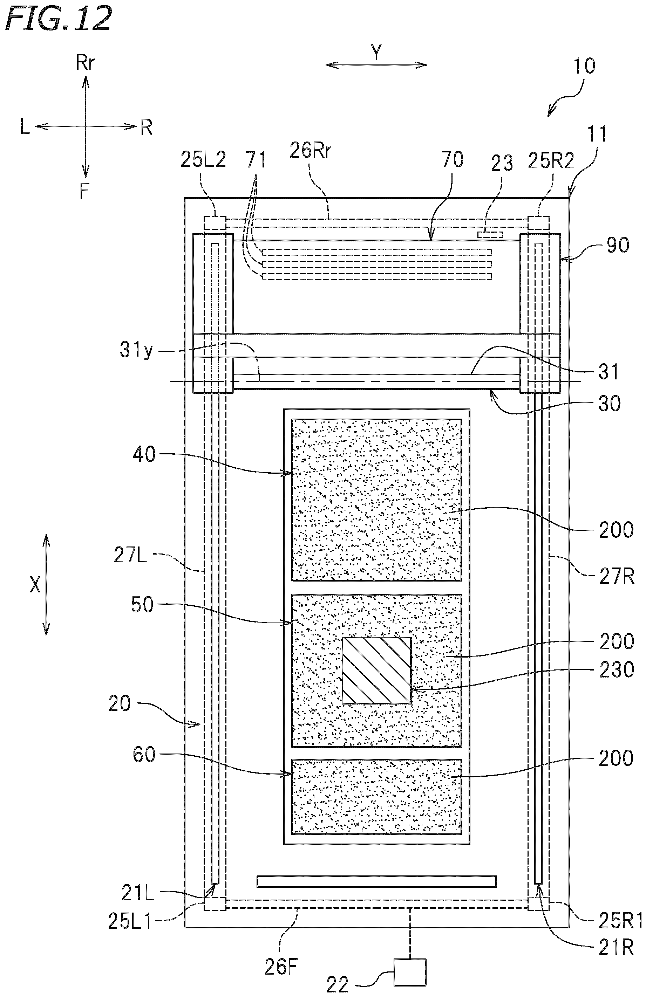

FIG. **11** is a schematic cross-sectional view of the three-dimensional shaping apparatus **10** in which the head unit **70** and the roller unit **30** move in the scanning direction X (corresponding to the secondary scanning direction **X** of the previously described embodiment, which is herein the front-rear direction), and which is of the line head type. FIG. **12** is a schematic plan view of the three-dimensional shaping apparatus **10** of FIG. **11****.** As shown in FIG. **12****,** in this embodiment, a pair of left and right guide rails **21L** and **21R** are provided on the main body **11.** The pair of guide rails **21L** and **21R** extend in the scanning direction **X.** The supply tank **40,** the shaping tank 50, and the powder collection tank **60** are provided between the pair of guide rails **21L** and **21R.**

The three-dimensional shaping apparatus **10** includes a moving body **90** that is slidably engaged with the pair of guide rails **21L** and **21R.** The moving body **90** is configured to be movable in the scanning direction **X** along the guide rails **21L** and **21R.** The moving body **90** supports the head unit **70** and the roller unit **30.**

In the present embodiment, the head unit **70** includes a plurality of discharge heads **71** arranged in line in the scanning direction **X.** The discharge heads **71** are so-called line heads, and the length thereof in the left-right direction **Y** is longer than the shaping tank **50.** Each of the discharge heads **71** includes a plurality of nozzles (not shown) that discharge the curing liquid. The plurality of nozzles are arranged in line in the left-right direction **Y.**

As in the embodiments described thus far, the roller unit **30** includes the stacking roller **31,** the drive device **33** that rotates the stacking roller **31,** and the detection device **34** that detects the rotational position of the stacking roller **31.** The stacking roller **31** is supported by the moving body **90.** The stacking roller **31** is located slightly upward of the main body **11.** A predetermined clearance (gap) is formed between the stacking roller **31** and the supply tank **40,** the shaping tank **50,** and the powder collection tank **60.** The stacking roller **31** is arranged forward relative to the discharge heads **71.** The stacking roller **31** is supported by the moving body **90** so as to be rotatable about the axis **31y** extending in the left-right direction. The drive device **33** rotates the stacking roller **31** about the axis **31y.** The rotation direction of the stacking roller **31** during the formation of the powder layer **210** is clockwise as viewed from the right side, as indicated by an arrow in FIG. **11****.** The detection device **34** detects the rotational position of the stacking roller **31** about the axis **31y.** There is no particular limitation on the configuration of the detection device **34,** and any of the previously described embodiments or other embodiments may be used.

As shown in FIG. **12****,** the three-dimensional shaping apparatus **10** includes a moving device **20.** The moving device **20** moves the moving body **90** along the guide rails **21L** and **21R** in the scanning direction **X.** The moving device **20** includes pulleys **25L1** and **25L2** arranged respectively on the front end side and the rear end side of the left guide rail **21L,** pulleys **25R1** and **25R2** arranged respectively on the front end side and the rear end side of the right guide rail **21R,** a front-side connection rod **26F** that connects together the pulley **25L1** and the pulley **25R1,** a rear-side connection rod **26Rr** that connects together the pulley **25L2** and the pulley **25R2,** a left-side belt **27L** that is wound around the pulley **25L1** and the pulley **25L2,** a right-side belt **27R** that is round around the pulley **25R1** and the pulley **25R2,** and a feed motor **22** that rotates the front-side connection rod **26F.** The feed motor **22** may be configured to rotate the rear-side connection rod **26Rr.** The belts **27L** and **27R** are fixed to the moving body **90.** When the feed motor **22** is driven, the connection rod **26F** rotates to drive the left and right belts **27L** and **27R.** Thus, the moving body **90** moves in the scanning direction **X** along the guide rails **21.** The head unit **70** and the roller unit **30** move together with the moving body **90** in the scanning direction **X.** During the formation of the powder layer **210,** the moving body **90** moves forward.

In this embodiment, the origin detection switch **23** for detecting that the moving device **20** is at the origin of movement detects that the moving body **90** is at the origin position. Here, the origin position of the moving device **20** is the most rearward of the movable range of the moving body **90.** Note however that the origin position of the moving device **20** is not limited to the end position of the movable range of the moving body **90.**

As described above, the three-dimensional shaping apparatus may be configured to be of the so-called line head type, and it may be configured to move the head unit and the roller unit. Note that the embodiment shown in FIG. **11** and FIG. **12** is merely an example. For example, the configuration for moving the moving body is not limited to those described above. The three-dimensional shaping apparatus may be of the line-head type, in which the shaping tank unit is moved, or of the shuttle-head type, in which the head unit and the roller unit are moved.

There is no limitation on the method for discharging the curing liquid. The curing liquid may be discharged by driving a piezoelectric element, e.g., a piezo element, for example, or by various other methods, such as a thermal method. Other configurations of the three-dimensional shaping apparatus described above are also merely examples and there is no particular limitation thereto. Unless otherwise specified, there is no limitation on the condition for discharging the curing liquid, the types and characteristics of the curing liquid and the powder material, and the shape of the shaped object to be shaped.

In addition, the embodiments disclosed herein do not limit the present invention, unless otherwise specified.

### DESCRIPTION OF REFERENCE SIGNS

- 10: Three-dimensional shaping apparatus
- 20: Secondary scanning direction moving device (moving device)
- 24: Linear encoder (third variation)
- 31: Stacking roller
- 33: Drive device
- 33a: Drive motor (motor)
- 34: Detection device
- 34a: Rotary encoder
- 34b: Sensor (first variation)
- 34c: Sensor (second variation)
- 35: Detected member (first variation)
- 36: Detected member (second variation)
- 40: Supply tank (powder supply device)
- 42: Supply table
- 50: Shaping tank
- 100: Controller
- 101: Stacking control section
- 102: Acquiring section

## Claims

1. A three-dimensional shaping apparatus, comprising:
a powder supply device including a supply table on which a powder material is placed;
a shaping tank arranged in a first direction relative to the supply table, in which a shaped object is shaped from the powder material;
a layer forming device that flattens, on the shaping tank, the powder material placed on the supply table; and
a controller, wherein:
the layer forming device includes:
a stacking roller configured to be rotatable about an axis extending in a second direction orthogonal to the first direction and provided at a predetermined height above the supply table and the shaping tank;
a drive device that rotates the stacking roller about the axis;
a detection device that detects a rotational position of the stacking roller about the axis; and
a moving device that moves the stacking roller at least from above the supply table to above the shaping tank by moving the stacking roller and/or the supply table and the shaping tank;
the controller includes:
a stacking control section that moves the stacking roller at least from above the supply table to above the shaping tank by controlling the moving device while rotating the stacking roller by controlling the drive device; and
an acquiring section that acquires the rotational position of the stacking roller about the axis from the detection device; and
the stacking control section controls the drive device based on the rotational position of the stacking roller acquired by the acquiring section so that a position of the stacking roller in the first direction and the rotational position of the stacking roller about the axis correspond to each other while moving over the shaping tank.

2. The three-dimensional shaping apparatus according to claim 1, wherein:
an origin of movement is set for the moving device;
an origin of rotation is set for the stacking roller; and
the stacking control section achieves a state where the moving device is moved to the origin of movement and the stacking roller is moved to the origin of rotation, and from that state, move the stacking roller at a predetermined moving speed while rotating the stacking roller at a predetermined rotation speed.

3. The three-dimensional shaping apparatus according to claim 2, wherein:
the drive device includes a motor connected to the stacking roller; and
the detection device includes a rotary encoder that is built in the motor and detects a rotational position of the motor.

4. The three-dimensional shaping apparatus according to claim 2, further comprising:
a detected member fixed to the stacking roller and rotating together with the stacking roller to indicate the origin of rotation of the stacking roller ,
wherein the detection device includes a sensor that detects whether the detected member is at the origin of rotation.

5. The three-dimensional shaping apparatus according to claim 2, wherein:
the drive device includes a rotation shaft connected to the stacking roller;
the three-dimensional shaping apparatus further includes a detected member fixed to the rotation shaft and rotating together with the rotation shaft to indicate an origin of rotation of the rotation shaft,; and
the detection device includes a sensor that detects whether the detected member is at the origin of rotation.

6. The three-dimensional shaping apparatus according to claim 1, further comprising:
a linear encoder that detects the position of the stacking roller in the first direction, wherein:
the drive device includes a motor connected to the stacking roller;
the detection device includes a rotary encoder that is built in the motor and detects a rotational position of the motor; and
the stacking control section controls the drive device and the moving device so that the position of the stacking roller in the first direction detected by the linear encoder and the rotational position of the stacking roller detected by the rotary encoder are synchronized with each other, thereby making the position of the stacking roller in the first direction and the rotational position of the stacking roller about the axis correspond to each other while moving over the shaping tank.
